# EUROPEAN PATENT SPECIFICATION

(11) **EP 4 053 985 B1**
(45) Date of publication and mention of the grant of the patent: **31.07.2024**
(21) Application number: 20882557.0
(22) Date of filing: 20.10.2020
(51) Int. Cl.: H01M 50/409, H01M 10/0525, H01M 50/414, H01M 50/494, H01M 50/44, H01M 50/491

(54) **BATTERY-SEPARATOR NONWOVEN FABRIC AND BATTERY SEPARATOR**
BATTERIETRENNVLIESSTOFF UND BATTERIESEPARATOR
NONTISSÉ DE SÉPARATEUR DE BATTERIE ET SÉPARATEUR DE BATTERIE

(30) Priority: 01.11.2019 JP 2019199975
(43) Date of publication of application: 07.09.2022
(73) Proprietor: TEIJIN FRONTIER CO., LTD., Osaka-shi, Osaka 530-0005 (JP)
(72) Inventor: SATO, Daiki, Osaka-shi Osaka 530-0005 (JP); KAMIYAMA, Mie, Osaka-shi, Osaka 530-0005 (JP)
(74) Representative: Carpmaels & Ransford LLP
(86) International application number: PCT/JP2020/039428
(87) International publication number: WO 2021/085250

(56) References cited:
- WO-A1-2017/159216
- CN-A- 109 473 613
- JP-A- 2005 190 778
- JP-A- 2006 236 991
- JP-A- 2010 238 448
- JP-A- 2012 092 461
- JP-A- H11 181 664
- US-A1- 2007 232 175
- US-A1- 2011 206 972
- US-B2- 7 923 143
- US-B2- 9 768 430

## Description

### Technical Field

The present invention relates to a battery-separator nonwoven fabric and a battery separator that are excellent in heat resistance, have a small pore diameter, and have a high tensile elongation and a high thrust strength.

### Background Art

A metal ion secondary battery has a high energy density, and thus, is widely used as a power source of portable electric equipment. In addition, even in large-size equipment such as EV and PHV, there is a movement to use a lithium ion secondary battery. Accordingly, the metal ion secondary battery is required to have not only performance such as fast charge-fast discharge (high-rate characteristics) and lifetime (cycle characteristics), but also safety of suppressing smoking, ignition, burst, and the like.

As such a battery separator, a nonwoven fabric separator including a polyester-based fiber having a melting point higher than that of an olefin-based resin porous film, a nonwoven fabric separator including a heat-resistant fiber such as an aramid fiber, a separator in which such a nonwoven fabric is coated and supported with a coating material or a resin, and the like are proposed (for example, Patent Documents 1 to 4).

However, the nonwoven fabric separator of the related art is excellent in thermal shrinkage properties, but has a large pore diameter, and thus, internal short-circuit due to contact with a bipolar active material, or minute short-circuit due to dendrite generated on a negative electrode easily occurs. In addition, even in a case where a support layer of a coating material-resin is formed in such a nonwoven fabric having an inhomogeneous structure, thickness unevenness of the support layer occurs due to surface irregularity of the nonwoven fabric itself, adhesiveness with an electrode is low, an ion conduction rate is not homogeneous in a plane, and as a result thereof, the minute short-circuit or the dendrite may occur, or the lifetime may be shortened.

In addition, in a composite separator in which a support layer of a coating material-resin is formed in a microporous film, resistance increases due to a small porosity-pore diameter size of the microporous film, and thus, it is not satisfactory from the viewpoint of user-friendliness such as fast charge·fast discharge properties.

### Citation List

### Patent Document

Patent Document 1: JP-A-2003-123728
Patent Document 2: JP-A-2006-19191
Patent Document 3: JP-T-2005-536857
Patent Document 4: JP-A-2007-157723

### Summary of the Invention

### Technical Problem

The invention has been made in consideration of the circumstances described above, and an object thereof is to provide a battery-separator nonwoven fabric and a battery separator that are excellent in heat resistance, have a small pore diameter, and have a high tensile elongation and a high thrust strength.

### Solution to Problem

As a result of intensive studies, the present inventors have invented a battery-separator nonwoven fabric and a battery separator that are capable of attaining the object described above.

Therefore, according to the invention, a "battery-separator nonwoven fabric containing a fiber A including a nanofiber having a fiber diameter of 100 to 1000 nm, a fiber B including a thermal adhesive ultrafine fiber having a fiber diameter of 100 to 2000 nm, and a fiber C including a thermal adhesive fiber having a single fiber fineness of 0.1 dtex or more, in which a tensile elongation of the nonwoven fabric is 10% or more; and wherein the fiber B is an unstreched polyester fiber" is provided.

In this case, it is preferable that the nonwoven fabric contains 30% or more of the fiber A, 20% or more of the fiber B, and 20% or more of the fiber C.

In addition, in the battery-separator nonwoven fabric of the invention, it is preferable that a thickness of the nonwoven fabric is 30 µm or less, and a porosity of the nonwoven fabric is 40 to 70%. In addition, it is preferable that the fiber A, the fiber B, or the fiber C includes a polyester fiber or a polyphenylene sulfide fiber.

In addition, according to the invention, a battery separator formed by using the battery-separator nonwoven fabric described above is provided. In this case, it is preferable that an organic porous layer or an inorganic fine particle layer having a melting point higher than that of the nonwoven fabric is laminated on one surface or both surfaces of the nonwoven fabric. In addition, it is preferable that a thickness of the organic porous layer or the inorganic fine particle layer is in a range of 1 to 10 µm.

### Advantageous Effects of the Invention

According to the invention, a battery-separator nonwoven fabric and a battery separator that are excellent in heat resistance, have a small pore diameter, and have a high tensile elongation and a high thrust strength can be obtained.

### Mode for Carrying Out the Invention

Hereinafter, an embodiment of the invention will be described in detail. A battery-separator nonwoven fabric of the invention contains a fiber A including a nanofiber having a fiber diameter of 100 to 1000 nm, a fiber B including a thermal adhesive ultrafine fiber having a fiber diameter of 100 to 2000 nm, and a fiber C including thermal adhesive fiber having a single fiber fineness of 0.1 dtex or more.

In this case, it is preferable that the nonwoven fabric contains 30 weight% or more (preferably 30 to 60 weight%) of the fiber A, 20 weight% or more (preferably 20 to 40 weight%) of the fiber B, and 20 weight% or more (preferably 20 to 40 weight%) of the fiber C, with respect to the weight of the nonwoven fabric. In addition, it is preferable that the total weight of the fiber A, the fiber B, and the fiber C is 100 weight%.

That is, since the fiber configuring the nonwoven fabric is fine, an extremely thin nonwoven fabric sheet is obtained in which an average pore diameter-maximum pore diameter is decreased, an ion movement and a battery reaction can be homogeneous, long lifetime and minute short-circuit prevention can be attained, and safety is improved.

Here, it is important that the fiber diameter of the nanofiber (the fiber A) is 100 to 1000 nm (preferably 100 to 800 nm, particularly preferably 200 to 700 nm). In a case where the fiber diameter is greater than 1000 nm, a pore diameter of the nonwoven fabric may increase. In addition, in a case where the fiber diameter is less than 100 nm, the dispersibility of the fiber itself may be degraded, agglomeration may occur, and a sheet may be less likely to be formed through a mesh in a papermaking process.

Here, the fiber diameter can be measured by photographing a sectional picture of a single fiber at a magnification of 30000 times with a transmissive electron microscope TEM. In this case, in TEM having a length measurement function, the fiber diameter can be measured by utilizing the length measurement function. In addition, in TEM having no length measurement function, the fiber diameter may be measured with a ruler after blowing up the photographed picture and considering the scale. In a case where the shape of a transverse section of the single fiber is a modified section (a shape other than a circular section), the diameter of a circumscribed circle of the transverse section of the single fiber is used as the fiber diameter.

In the nanofiber (the fiber A), it is preferable that an aspect ratio (a ratio L/D of a fiber length L to a fiber diameter D) is in a range of 100 to 2500.

In addition, a fiber type of the nanofiber (the fiber A) may be a polyamide fiber and a polyolefin fiber, and a polyester fiber or a polyphenylene sulfide fiber is preferable. Both fibers have a melting point of 260 to 270°C, are excellent in heat resistance, solvent resistance, and hydrolyzability, and are a high-reliability polymer as a battery separator or a battery separator base material. In addition, it is preferable that the polyester fiber and/or the polyphenylene sulfide fiber are a stretched fiber, and it is preferable that a birefringence index (Δn) of the fiber is greater than 0.05.

As polyester forming the polyester fiber, polyethylene terephthalate (PET), polytrimethylene terephthalate (PTT), polybutylene terephthalate (PBT), polyethylene naphthalate, and a copolymer in which the polyethylene terephthalate, the polytrimethylene terephthalate, the polybutylene terephthalate, and the polyethylene naphthalate are set as a main repeating unit, and an aromatic dicarboxylic acid such as an isophthalic acid and a 5-sulfoisophthalic metal salt, an aliphatic dicarboxylic acid such as an adipic acid and a sebacic acid, a hydroxycarboxylic condensate such as ε-caprolactone, a glycol component such as diethylene glycol, trimethylene glycol, tetramethylene glycol, and hexamethylene glycol, and the like are further copolymerized as the other comonomer component are preferable. The polyester may be material-recycled or chemically recycled polyester, or polyethylene terephthalate described in JP-A-2009-091694, which is formed by using a monomer component obtained with biomass, that is, a biological material as a raw material. Further, the polyester may be polyester obtained by using a catalyst containing a specific phosphorus compound and a specific titanium compound, as described in JP-A-2004-270097 or JP-A-2004-211268.

A polyarylene sulfide resin forming the polyphenylene sulfide (PPS) fiber may be any resin insofar as the resin belongs to a category referred to as the polyarylene sulfide resin. Examples of a constituent unit of the polyarylene sulfide resin are capable of including a p-phenylene sulfide unit, m-phenylene sulfide unit, o-phenylene sulfide unit, phenylene sulfide sulfone unit, phenylene sulfide ketone unit, phenylene sulfide ether unit, diphenylene sulfide unit, substituent-containing phenylene sulfide unit, a phenylene sulfide unit having a branched structure, and the like. Among them, it is preferable that the polyarylene sulfide resin contains 70 mol% or more, particularly 90 mol% or more of the p-phenylene sulfide unit, and poly(p-phenylene sulfide) is more preferable.

A manufacturing method of the nanofiber (the fiber A) is not particularly limited, and a method disclosed in the pamphlet of WO 2005/095686 is preferable. That is, it is preferable that a composite fiber containing an island component including a fiber-forming thermoplastic polymer, and a sea component including a polymer that is more easily dissolved with respect to an alkali aqueous solution than the fiber-forming thermoplastic polymer (hereinafter, may be referred to as an "easily soluble polymer") is subjected to an alkali reduction process, and the sea component is dissolved and removed, from the viewpoint of the fiber diameter and the homogeneousness thereof.

Here, in a case where a dissolution velocity ratio of the alkali aqueous solution-easily soluble polymer forming the sea component to the fiber-forming thermoplastic polymer forming the island component is 200 or more (preferably 300 to 3000), island separativeness is excellent, which is preferable. In a case where a dissolution velocity is less than 200 times, the separated island component in the surface layer of the fiber section is dissolved due to its small fiber diameter while the sea component in the center portion of the fiber section is dissolved, and even though an amount corresponding to the sea is reduced, the sea component in the center portion of the fiber section is not capable of being completely dissolved and removed, which leads to thickness unevenness of the island component or solvent erosion of the island component itself, and a fiber having a homogeneous fiber diameter may not be obtained.

Preferred examples of the easily soluble polymer forming the sea component are capable of including polyesters, aliphatic polyamides, and polyolefins such as polyethylene and polystyrene, which are particularly excellent in fiber formability. As more specific examples, a polylactic acid, an ultra-high-molecular-weight polyalkylene oxide condensation type polymer, and copolymerized polyester of a polyalkylene glycol-based compound and a 5-sodium sulfoisophthalate are easily dissolved with respect to the alkali aqueous solution, and thus, are preferable. Here, the alkali aqueous solution indicates a potassium hydroxide aqueous solution, a sodium hydroxide aqueous solution, and the like. In addition, examples of a combination of the sea component and a solution for dissolving the sea component are capable of including a hydrocarbon-based solvent such as a formic acid with respect to aliphatic polyamide such as Nylon 6 and Nylon 66, trichloroethylene with respect to polystyrene, and hot toluene or hot xylene with respect to polyethylene (particularly high-pressure low-density polyethylene and linear low-density polyethylene), and hot water with respect to polyvinyl alcohol or ethylene-modified vinyl alcohol-based polymer.

Among the polyester-based polymers, a polyethylene terephthalate-based copolymerized polyester having an intrinsic viscosity of 0.4 to 0.6 that is obtained by copolymerizing 6 to 12 mol% of 5-sodium sulfoisophthalate and 3 to 10 mass% of polyethylene glycol having molecular weight of 4000 to 12000 is preferable. Here, the 5-sodium sulfoisophthalate contributes to the improvement of hydrophilicity and a melt viscosity, and the polyethylene glycol (PEG) improves the hydrophilicity. In addition, the hydrophilicity increases as the molecular weight of PEG increases, which is considered to occur due to a higher-order structure of PEG, but reactivity is degraded, and a blend system is formed, and thus, there may be a problem in terms of heat resistance or spinning stability. In addition, in a case where a copolymerization amount is 10 mass% or more, the melt viscosity may decrease.

On the other hand, preferred examples of the hardly soluble polymer forming the island component include polyamides, polyesters, polyphenylene sulfides, polyolefins, and the like. Specifically, in an application in which a mechanical strength or heat resistance is required, as the polyesters, polyethylene terephthalate (PET), polytrimethylene terephthalate, polybutylene terephthalate, polyethylene naphthalate, and a copolymer of an aromatic dicarboxylic acid such as an isophthalic acid and a 5-sulfoisophthalic metal salt, an aliphatic dicarboxylic acid such as an adipic acid and a sebacic acid, a hydroxycarboxylic condensate such as ε-caprolactone, a glycol component such as diethylene glycol, trimethylene glycol, tetramethylene glycol, hexamethylene glycol, and the like, in which the polyethylene terephthalate, polytrimethylene terephthalate, polybutylene terephthalate, and polyethylene naphthalate are set as a main repeating unit, are preferable. In addition, as the polyamides, aliphatic polyamides such as Nylon 6 (Ny-6) and Nylon 66 (Ny-66) are preferable. In addition, the polyolefins are hardly affected by acid, alkali, or the like, and have a comparatively low melting point, and thus, can be used as a binder component after being taken out as an ultrafine fiber, and preferred examples thereof are capable of including an ethylene copolymer of a vinyl monomer such as high-density polyethylene, medium-density polyethylene, high-pressure low-density polyethylene, linear low-density polyethylene, isotactic polypropylene, an ethylene propylene copolymer, and a maleic anhydride, and the like. In particular, polyesters or polyphenylene sulfides such as polyethylene terephthalate, polytrimethylene terephthalate, polybutylene terephthalate, polyethylene terephthalate isophthalate having an isophthalic acid copolymerization rate of 20 mol% or less, and polyethylene naphthalate have heat resistance or dynamic properties due to a high melting point, and thus, can be applied to an application in which heat resistance or a strength is required, and therefore, are preferable, compared to an ultrafine fibrillated fiber including a polyvinyl alcohol/polyacrylonitrile mixed spun fiber. Note that, the island component is not limited to the circular section, and may have a modified section such as a triangular section and a flat section.

The polymer forming the sea component and the polymer forming the island component may contain various additives such as a delustering agent, an organic filler, an antioxidant, a heat stabilizer, a light stabilizer, a flame retarder, a lubricant, an antistatic agent, an antirust agent, a cross-linking agent, a foaming agent, a fluorescence agent, a surface smoothing agent, a surface gloss improver, and a mold-release improver such as a fluorine resin, as necessary, within a range not affecting yarn manufacturing properties and physical properties of the fiber after being extracted.

In the sea-island composite fiber, it is preferable that the melt viscosity of the sea component is greater than the melt viscosity of the island component polymer in the melt spinning. In such a relationship, even in a case where a composite mass ratio of the sea component is small as less than 40%, the islands are less likely to be joined, which is preferable.

A preferred melt viscosity ratio (sea/island) is in a range of 1.1 to 2.0, particularly in a range of 1.3 to 1.5, and in a case where the melt viscosity ratio is less than 1.1, the island components are easily joined in the melt spinning, whereas in a case where the melt viscosity ratio is greater than 2.0, a viscosity difference excessively increases, and thus, a spinning condition is easily degraded.

Next, it is preferable that the number of islands is 100 or more (more preferably 300 to 1000). In addition, it is preferable that a sea-island composite weight ratio (sea : island) is in a range of 20 : 80 to 80 : 20. According to such a range, it is possible to decrease the thickness of the sea component between the islands, the sea component is easily dissolved and removed, and the island component is easily converted to the ultrafine fiber, which is preferable. Here, in a case where the ratio of the sea component is greater than 80 weight%, the thickness of the sea component excessively increases, whereas in a case where the ratio of the sea component is less than 20 weight%, the amount of the sea component excessively decreases, and the islands are easily joined.

As a spinneret used in the melt spinning, an arbitrary spinneret including a hollow pin group or a fine hole group for forming the island component can be used. For example, the spinneret may be a spinneret in which the island component extruded from the hollow pin or the fine hole and a sea component flow of which a flow path is designed to fill a space between the island components are joined together and compressed, and thus, a sea-island section is formed. The ejected sea-island composite fiber is solidified by cooling air, and is taken up by a rotation roller or an ejector set at a predetermined taking-up velocity, and thus, an unstretched yarn is obtained. The taking-up velocity is not particularly limited, and preferably 200 to 5000 m/minute. In a case where the taking-up velocity is less than 200 m/minute, productivity may be degraded. On the other hand, in a case where the taking-up velocity is greater than 5000 m/minute, spinning stability may be degraded.

The obtained fiber may be directly provided to a cutting process or the subsequent extraction process, in accordance with the application-purpose of the ultrafine fiber to be obtained after extracting the sea component, or can be provided to the cutting process or the subsequent extraction process through a stretching process or a heat treatment process in order to match the desired strength·elongation·thermal contraction characteristics. The stretching process may be a separate stretching method in which spinning and stretching are performed in separate steps, or may be a direct stretching method in which stretching is performed immediately after spinning in one process.

Next, such a composite fiber is cut such that the ratio L/D of the fiber length L to the island diameter D is in a range of 100 to 2500. It is preferable that such cutting is performed by bundling the fibers in unit of several tens to several millions into a tow and cutting the tow with a guillotine cutter, a rotary cutter, or the like.

The fiber having the fiber diameter is obtained by performing alkali reduction processing with respect to the composite fiber. In this case, in the alkali reduction processing, a ratio (a bath ratio) of a fiber to an alkali solution is preferably 0.1 to 5.0%, and is more preferably 0.4 to 3.0%. In a case where the ratio is less than 0.1%, there are many contacts between the fiber and the alkali solution, but process properties such as drainage may be degraded. On the other hand, in a case where the ratio is greater than 5.0%, the amount of fiber excessively increases, and thus, the entanglement of the fibers may occur in the alkali reduction processing. Note that, the bath ratio is defined by the following expression. Bath Ratio (%) = (Fiber Weight (gr)/Alkali Aqueous Solution Weight (gr) × 100)

In addition, a treatment time of the alkali reduction processing is preferably 5 to 60 minutes, and is more preferably 10 to 30 minutes. In a case where the treatment time is shorter than 5 minutes, the alkali reduction may be insufficient. On the other hand, in a case where the treatment time is longer than 60 minutes, even the island component may be reduced.

In addition, in the alkali reduction processing, it is preferable that an alkali concentration is 2 to 10 weight%. In a case where the alkali concentration is less than 2 weight%, the alkali is insufficient, and a reduction velocity may be extremely slow. On the other hand, in a case where the alkali concentration is greater than 10 weight%, the alkali reduction extremely proceeds, and even the island portion may be reduced.

Note that, the order of the cutting process and the alkali reduction process may be reversed, and thus, the alkali reduction processing may be performed, and then, the cutting may be performed.

In addition, in the fiber B including the thermal adhesive ultrafine fiber, it is important that the fiber diameter is 100 to 2000 nm (preferably 1050 to 1600 nm). The fiber B including the thermal adhesive ultrafine fiber can be manufactured as with the nanofiber (the fiber A) except that the fiber B is unstretched (a birefringence index (Δn) is 0.05 or less). Note that, the polyester fiber or the polyphenylene sulfide fiber is also preferable as a fiber type of the fiber B including the thermal adhesive ultrafine fiber.

In addition, as the fiber C including the thermal adhesive fiber, an unstretched fiber (a birefringence index (Δn) is 0.05 or less) or a composite fiber having a single fiber fineness of 0.1 dtex (a fiber diameter of 3.0 µm) or more can be used.

Here, in the thermal adhesive fiber C, it is preferable that the single fiber fineness is 0.2 to 3.3 dtex (more preferably 0.5 to 1.7 dtex). In addition, it is preferable that the fiber length of the thermal adhesive fiber is 1 to 20 mm (more preferably 3 to 10 mm). Note that, in a case of using the thermal adhesive fiber including the unstretched fiber, a thermal compression bonding process is required after a drier after papermaking, and thus, it is preferable to perform a calender/embossing treatment after papermaking.

In the fiber B including the thermal adhesive ultrafine fiber and/or the thermal adhesive fiber C, examples of the unstretched fiber include an unstretched polyester fiber or a polyphenylene sulfide fiber spun at a spinning velocity of preferably 800 to 1200 m/minute, more preferably 900 to 1150 m/minute.

Examples of polyester used in the unstretched fiber include polyethylene terephthalate, polytrimethylene terephthalate, and polybutylene terephthalate. Among them, the polyethylene terephthalate and the polytrimethylene terephthalate are preferable, from the viewpoint of productivity, dispersibility with respect to water, and the like. In addition, as polyphenylene sulfide used in the unstretched fiber, any polyphenylene sulfide may be used insofar as the polyphenylene sulfide belongs to a category referred to as the polyarylene sulfide resin. Examples of a constituent unit of the polyarylene sulfide resin are capable of including a p-phenylene sulfide unit, a m-phenylene sulfide unit, an o-phenylene sulfide unit, a phenylene sulfide sulfone unit, a phenylene sulfide ketone unit, a phenylene sulfide ether unit, a diphenylene sulfide unit, a substituent-containing phenylene sulfide unit, a branched structure-containing phenylene sulfide unit, and the like. Among them, it is preferable that the polyarylene sulfide resin contains 70 mol% or more, particularly 90 mol% or more of the p-phenylene sulfide unit, and poly(p-phenylene sulfide) is more preferable.

On the other hand, in the fiber B including the thermal adhesive ultrafine fiber and/or the thermal adhesive fiber C, as the composite fiber for a binder fiber, a sheath-core manner composite fiber in which a polymer component exhibiting an adhesive effect by being fused with a heat treatment at 80 to 170°C performed after papermaking (for example, amorphous copolymerized polyester or modified polyphenylene sulfide) is arranged in a sheath portion, and another polymer having a melting point higher than that of the polymer by 20°C or higher (for example, general polyester such as polyethylene terephthalate, polytrimethylene terephthalate, and polybutylene terephthalate) is arranged in a core portion is preferable. Note that, the composite fiber for a binder fiber may include a binder component (a low-melting point component) forming the entire surface or a part of the surface of a single fiber, or may be any of a sheath-core manner composite fiber, an eccentric sheath-core manner composite fiber, a side-by-side manner composite fiber, and the like.

Here, the amorphous copolymerized polyester can be obtained as a random or block copolymer of an acid component such as a terephthalic acid, an isophthalic acid, a 2,6-naphthalene dicarboxylic acid, a 5-sodium sulfoisophthalate, an adipic acid, a sebacic acid, an azelaic acid, a dodecanoic acid, and a 1,4-cyclohexane dicarboxylic acid, and a diol component such as ethylene glycol, 1,3-propanediol, 1,4-butanediol, 1,5-pentanediol, 1,6-hexanediol, diethylene glycol, 1,4-cyclohexanediol, and 1,4-cyclohexane dimethanol. Among them, it is preferable to use the terephthalic acid, the isophthalic acid, the ethylene glycol, and the diethylene glycol, which have been widely used from the related art, as a main component, from the viewpoint of the cost. Such copolymerized polyester has a glass transition point in a range of 50 to 100°C, and does not exhibit a clear crystalline melting point.

In addition, as the modified polyphenylene sulfide, a polymer in which a melting point drops and a crystallization temperature drops by copolymerization or the like is preferable.

In the battery-separator nonwoven fabric of the invention, the type of nonwoven fabric is not limited, but a wet nonwoven fabric is preferable. As a method for manufacturing such a wet nonwoven fabric, a manufacturing method in which papermaking is performed with a general Fourdrinier paper machine, a general Tanmo paper machine, a general cylinder paper machine, or a combination of a plurality of paper machines to obtain multilayer paper, and then, a heat treatment is performed is preferable. In this case, as the heat treatment process, either a Yankee drier or an air-through drier can be used after the papermaking process. In addition, calender such as a metal/metal roller, a metal/paper roller, and a metal/elastic roller may be performed after the heat treatment. The number of layers may be a single layer, or may be a multilayer.

In addition, as a manufacturing method of a nonwoven fabric having a multilayer structure, for example, the wet nonwoven fabric as described above may be obtained, and then, a constituent fiber of the nonwoven fabric may be bonded by using a calendering machine or the like.

In the battery-separator nonwoven fabric obtained as described above, it is preferable that the thickness of the nonwoven fabric is 30 µm or less. In a case where the thickness is greater than the range described above, resistance increases, and there is a demerit in making a battery compact. It is preferable that the thickness is small, and it is preferable that the thickness is 10 µm or more from the viewpoint of the homogeneousness of the nonwoven fabric.

In addition, it is preferable that the porosity of the nonwoven fabric is 40 to 70%. In a high-void structure of the nonwoven fabric itself, the movement-retention of an electrolytic solution-ion is smooth, which leads a charge-discharge efficiency or long lifetime. In a case where the porosity is less than 40%, the merit of the nonwoven fabric decreases, and in a case where the porosity is greater than 70%, the nonwoven fabric is inhomogeneous, and dendrite may occur.

In addition, it is preferable that weight per unit of the nonwoven fabric is in a range of 5 to 30 g/m² (more preferably 8 to 25 g/m²).

The elongation of the nonwoven fabric improves handling ability in assembling processing and durability in tension, and it is important that a tensile elongation in a MD direction and/or a CD direction (preferably the MD direction and the CD direction) is 10% or more (preferably 10 to 20%). Note that, the MD direction is a machine direction of the nonwoven fabric, and the CD direction is a width direction. In the nonwoven fabric, an adhesive force between the fibers is related to a tensile strength or an elongation, and has a higher strength-higher elongation as the thickness of the fiber decreases and the number of adhesive points increases. In a case where the tensile elongation is 10% or more, excellent handling ability such as roll-shaped unwinding and winding or tear resistance can be obtained. In a case where the tensile elongation is less than 10%, tear may easily occur, and assembling properties and performance reliability may decrease. Note that, as the strength of the nonwoven fabric, it is preferable that the tensile strength in the MD direction and/or the CD direction (preferably the MD direction and the CD direction) is 5.0 N/15 mm or more (preferably 5.0 to 20.0 N/15 mm).

In addition, as the strength of the nonwoven fabric, it is preferable that a thrust strength is 1.3 N or more (preferably 1.3 to 3.0 N). The thrust strength indicates toughness when stress is concentrated or in wound type manufacturing, and it is preferable that the thrust strength is 1.3 N or more such that the stress can be absorbed.

In addition, as heat stability, it is preferable that a thermal shrinkage rate after being left to stand at 180°C for 1 hour is 3% or less (preferably 0.01 to 3%) in both of the MD direction and the CD direction. In the thermal shrinkage rate, it is necessary to increase the heat stability-heat resistance such that short-circuit does not occur due to pores that are widened by the shrinkage of the separator at a high temperature or by the occurrence of tear due to melting, from the viewpoint of heat resistance. In a case where the shrinkage rate is greater than the range described above, ignition, burst, or the like may occur due to insufficient heat resistance.

Next, the battery separator of the invention is a battery separator formed by using the battery-separator nonwoven fabric described above.

In this case, it is preferable that an organic porous layer or an inorganic fine particle layer that has a melting point higher than that of the nonwoven fabric and a thickness in a range of 1 to 10 µm is laminated on one surface or both surfaces of the nonwoven fabric. The layer is not particularly limited, and a porous layer of an aramid-based resin or a fluorine-based resin, and an inorganic fine particle layer including fine particles such as alumina and titanium oxide, and a binder can be used. Each of the layers has high heat resistance such as having a melting point higher than that of the nonwoven fabric or having no melting point, and a coat layer can be suitably provided as necessary.

The battery separator of the invention has the configuration described above, and thus, is excellent in minute short-circuit prevention and long lifetime according to the control of the pore diameter, and low resistibility.

### Examples

Hereinafter, the invention will be described by using Examples, but the invention is not limited to the following Examples. Physical properties in Examples were measured by the following methods.

### (1) Fiber Diameter

A fiber sectional picture was photographed and measured at a magnification of 30000 times by using a transmissive electron microscope TEM (having a length measurement function). Here, as a fiber diameter, the diameter of a circumscribed circle of the transverse section of a single fiber was used (an average value of n of 5).

### (2) Fiber Length

A short fiber was placed on a base, and a fiber length L was measured at 20 to 500 times by using the scanning electron microscope (SEM) (an average value of n of 5). In this case, the fiber length L was measured by utilizing the length measurement function of SEM.

### (3) Weight per Unit

Weight per unit was measured on the basis of JIS P8124 (Paper and board-Determination of grammage).

### (4) Thickness

A thickness was measured on the basis of JIS P8118 (Paper and board-Determination of thickness and density). The measurement was performed at a measurement load of 75 g/cm² and the number of samples of 5, and an average value was obtained.

### (5) Porosity

A porosity was calculated by the following expression from the weight per unit, the thickness, and the fiber density (g/cm³). Porosity (%) = 100 - ((Weight per Unit) / (Thickness)/Fiber Density × 100)

### (6) Pore Diameter

An average pore diameter and a maximum pore diameter were obtained by ASTM-F-316.

### (7) Gurley Air Permeability

A Gurley air permeability was measured on the basis of JIS P8117 (Paper and board-Determination of air permeance).

### (8) Thrust Strength

A thrust strength was measured by using a handy compression testing machine "KES-G5" (manufactured by KATO TECH CO., LTD.). A thrust test was performed at a curvature radius of a needle tip end of 0.5 mm and a thrust velocity of 50±5 mm/minute, and a maximum thrust load was set to a thrust strength (N).

### (9) Thermal Shrinkage Rate

A sheet sample of 100 mm in a MD direction × 100 mm in a CD direction was left to stand in a drying machine at 180°C for 1 hour, and a shrinkage rate was calculated from the length in the MD direction and the CD direction after the treatment. Here, a microporous film containing polyolefin was left to stand in a drying machine at 130°C for 1 hour, and the shrinkage rate was calculated. Thermal Shrinkage Rate (%) = ((Length before Heat Treatment) - (Length after Heat Treatment) ) / (Length before Heat Treatment) × 100

### (10) Tensile Strength-Elongation

A tensile strength-elongation in the MD direction and the CD direction was measured on the basis of JIS P8113 (Paper and board-Determination of tensile properties).

### (11) Consecutive Papermaking Properties

In a consecutive paper machine, when a transfer to a blanket from a drainage mesh is performed, a case where a paper strength in a wet paper state is insufficient and the transfer may not be performed was evaluated as "×" (poor), and a case where the wet paper strength is high and the transfer can be performed was evaluated as "○" (excellent).

### (12) Melt Viscosity

A polymer after a dry treatment was set in an orifice set at an extruder temperature in spinning, and melted and retained for 5 minutes, and then, extruded by applying a load of several levels, and a shear velocity and a melt viscosity at this time were plotted. On the basis of such data, a shear velocity-melt viscosity curve was prepared, and the melt viscosity was read when the shear velocity was 1000 sec⁻¹.

### (13) Alkali Reduction Velocity Ratio

An unstretched yarn obtained by ejecting a polymer of each of a sea component and a polymer of an island component from a spinneret including 24 circular holes having a diameter of 0.3 mm and a length of 0.6 mm, and by taking up the polymer at a spinning velocity 1000 to 2000 m/minute was stretched such that a residual elongation was in a range of 30 to 60%, and thus, a multifilament of 83 dtex/24 filaments was prepared. A reduction velocity was calculated from a dissolution time and a dissolution amount by using 1.5 wt% of a sodium hydroxide (NAOH) aqueous solution at 80°C and by setting a bath ratio to 100.

### [Example 1]

Polyethylene terephthalate (PET) having a melt viscosity at 285°C of 120 Pa·sec was used in the island component, modified polyethylene terephthalate in which 4 weight% of polyethylene glycol having a melt viscosity at 285°C of 135 Pa·sec and average molecular weight of 4000, and 9 mol% of 5-sodium sulfoisophthalate were copolymerized was used in the sea component, spun at a weight ratio of sea : island = 10 : 90 by using a spinneret having the number of islands of 400, and taken up at a spinning velocity of 1500 m/minute. An alkali reduction velocity difference was 1000 times. Stretching was performed at 3.9 times, and then, cutting to 0.5 mm was performed with a guillotine cutter, and thus, a sea-island composite fiber was obtained. The fiber was reduced by 10% with 4% of a NaOH aqueous solution at 75°C, and set to the fiber A including the nanofiber (a stretched polyester fiber, a fiber diameter of 700 nm, a fiber length of 0.5 mm, an aspect ratio of 714, a circular section, a birefringence index Δn of greater than 0.05).

On the other hand, an unstretched polyester fiber obtained by spinning polyethylene terephthalate with an ordinary method was prepared, and set to the fiber B (a fiber diameter of 1.2 µm (1200 nm), a fiber length of 0.4 mm, an aspect ratio of 333, a circular section, a birefringence index Δn of 0.05 or less, and an elongation of 200 to 400%).

In addition, an unstretched polyester fiber obtained by spinning polyethylene terephthalate with an ordinary method was prepared, and set to the fiber C (a single fiber fineness of 0.2 dtex, a fiber diameter of 4.3 µm, a fiber length of 3 mm, an aspect ratio of 697, a circular section, a birefringence index Δn of 0.05 or less, and an elongation of 200 to 4000).

Next, a nonwoven fabric including a polyester fiber was obtained by using 50 weight% of the fiber A, 30 weight% of the fiber B, and 20 weight% of the fiber C, with a wet papermaking method. Such a wet nonwoven fabric was further subjected to a calender heat treatment, and a desired thickness, and a desired heat resistance·shrinkage rate were applied to the nonwoven fabric. The physical properties are shown in Table 1 and Table 2.

Such a nonwoven fabric included only the polyester fiber, and thus, was excellent in heat resistance. Further, by using a nanofiber and a thermal adhesive ultrafine fiber (an unstretched fiber), the number of fiber adhesive points increased, and a dense network structure was formed, and thus, a nonwoven fabric having a small pore diameter, a high tensile elongation, and a high thrust strength was obtained.

### [Example 2]

In Example 1, the fiber diameter of the fiber was changed, and a polyester nonwoven fabric including 50 weight% of a nanofiber having a fiber diameter of 400 nm (a polyester stretched fiber, the fiber A), 30 weight% of a thermal adhesive fiber having a fiber diameter of 1.2 µm (a polyester unstretched fiber, the fiber B), and 20 weight% of a thermal adhesive fiber having a fiber diameter of 4.5 µm (a polyester unstretched fiber, the fiber C) was prepared by a wet papermaking method. Such as wet nonwoven fabric was subjected to the calender heat treatment, and the physical properties were measured, as with Example 1. The nonwoven fabric included only the polyester fiber, and thus, was excellent in heat resistance. Further, by using a nanofiber of 400 nm and a thermal adhesive ultrafine fiber (an unstretched fiber), a denser fiber network structure was formed, and thus, a nonwoven fabric having a small pore diameter, a high tensile elongation, and a high thrust strength was obtained. The physical properties are shown in Table 1 and Table 2.

### [Example 3]

In Example 1, the fiber diameter of the fiber was changed, and a polyester nonwoven fabric including 50 weight% of a nanofiber having a fiber diameter of 200 nm (a polyester stretched fiber, the fiber A), 30 weight% of a thermal adhesive fiber having a fiber diameter of 1.2 µm (a polyester unstretched fiber, the fiber B), and 20 weight% of a thermal adhesive fiber having a fiber diameter of 4.5 µm (a polyester unstretched fiber, the fiber C) was prepared by a wet papermaking method. Such a wet nonwoven fabric was subjected to a calender heat treatment, and the physical properties were measured, as with Example 1. The nonwoven fabric included only the polyester fiber, and thus, was excellent in heat resistance. Further, by using a nanofiber of 200 nm and a thermal adhesive ultrafine fiber (an unstretched fiber), a denser fiber network structure was formed, and thus, a nonwoven fabric having a small pore diameter, a high tensile elongation, and a high thrust strength was obtained. The physical properties are shown in Table 1 and Table 2.

### [Example 4]

An aqueous coating liquid including aluminum oxide particles having a particle diameter of 0.5 µm, and a binder was applied to one surface of the wet nonwoven fabric obtained in Example 1, and thus, a coating treatment sheet in which weight per unit increased by 9.7 g/m² and a thickness increased by 5.8 µm was prepared, and the physical properties were measured. Dimensional stability was improved by coating ceramic particles and a binder resin, and a shrinkage rate at 180°C decreased. As a battery separator, the coating treatment sheet was excellent in heat resistance and high void properties, minute short-circuit prevention and long lifetime according to the control of the pore diameter, and low resistibility. The physical properties are shown in Table 1 and Table 2.

### [Comparative Example 1]

A microporous film including polyolefin was evaluated. The microporous film was excellent in the control of a fine pore diameter, but included only the polyolefin, and thus, had low heat resistance. The physical properties are shown in Table 1 and Table 2.

### [Comparative Example 2]

A microporous film including polyolefin was evaluated. The microporous film was excellent in the control of a fine pore diameter, but included only the polyolefin, and thus, had low heat resistance. The physical properties are shown in Table 1 and Table 2.

### [Comparative Example 3]

A polyester nonwoven fabric including 50 weight% of a microfiber having a fiber diameter of 3 µm (a polyester stretched fiber) and 50 weight% of a thermal adhesive fiber having a fiber diameter 4.5 µm (a polyester unstretched fiber) was prepared by a wet papermaking method. Such base paper was further subjected to a calender heat treatment. The base paper included only the polyester fiber, and thus, was excellent in heat resistance, but had a thick fiber diameter, and therefore, an average pore diameter and a maximum pore diameter increased, and there was a concern that short-circuit or the like occurs. The physical properties are shown in Table 1 and Table 2.

### [Comparative Example 4]

A polyester nonwoven fabric including 60 weight% of a nanofiber having a fiber diameter of 700 nm (a polyester stretched fiber) and 40 weight% of a thermal adhesive fiber having a fiber diameter of 1.2 µm (a polyester unstretched fiber) was prepared by a wet papermaking method. Such a wet nonwoven fabric was subjected to a calender heat treatment, and the physical properties were measured, as with Example 1. Such a nonwoven fabric included only the polyester fiber, and thus, was excellent in heat resistance, but the fiber C including the thermal adhesive fiber having a single fiber fineness of 0.1 dtex or more was not used, and therefore, a wet strength was weak, and consecutive papermaking properties were degraded. In addition, a tensile elongation and a thrust strength were low. The physical properties are shown in Table 1 and Table 2.

### [Comparative Example 5]

A polyester nonwoven fabric including 60 weight% of a nanofiber having a fiber diameter of 700 nm (a polyester stretched fiber), 30 weight% of a thermal adhesive fiber having a fiber diameter of 1.2 µm (a polyester unstretched fiber), and 10 weight% of a thermal adhesive fiber having a fiber diameter of 4.5 µm (a polyester unstretched fiber) was prepared by a wet papermaking method. Such base paper was subjected to a calender heat treatment, and the physical properties were measured, in the same condition as that of Example 1. Since the weight ratio of the fiber C including the thermal adhesive fiber having a single fiber fineness of 0.1 dtex or more was as low as 10 weight%, a wet strength was weak, and consecutive papermaking properties were degraded, as with Comparative Example 4. In addition, a tensile elongation and a thrust strength were low. The physical properties are shown in Table 1 and Table 2.

### [Comparative Example 6]

A polyester nonwoven fabric including 60 weight% of a nanofiber having a fiber diameter of 700 nm (a polyester stretched fiber) and 40 weight% of a thermal adhesive fiber having a fiber diameter of 4.5 µm (a polyester unstretched fiber) was prepared by a wet papermaking method. Such a nonwoven fabric was subjected to a calender heat treatment, and the physical properties were measured, in the same condition as that of Example 1. Since the fiber B including the thermal adhesive ultrafine fiber was not used, a Gurley air permeability was low, a pore diameter was large, and a tensile elongation was low. The physical properties are shown in Table 1 and Table 2.

**[Table 1]**

| | Configuration | Ratio (weight%) of constituent fiber | | | | | | Coating | Weight per unit | Thickness | Porosity | Average pore diameter | Maximum pore diameter |
|---|---|---|---|---|---|---|---|---|---|---|---|---|---|
| | | Nanofiber A: 700 nm | Nanofiber A: 400 nm | Nanofiber A: 200 nm | Thermal adhesive ultrafine fiber B | Thermal adhesive fiber C | Microfiber | Present/ absent | g/m2 | µm | % | µm | µm |
| Example 1 | PET Ultrafine fiber nonwoven fabric | 50 | | | 30 | 20 | 0 | Absence | 9.8 | 16.2 | 55.4 | 1.0 | 2.4 |
| Example 2 | PET Ultrafine fiber nonwoven fabric | | 50 | | 30 | 20 | 0 | Absence | 20.8 | 28.2 | 45.8 | 0.3 | 0.9 |
| Example 3 | PET Ultrafine fiber nonwoven fabric | | | 50 | 30 | 20 | 0 | Absence | 22.5 | 29.4 | 43.8 | 0.2 | 0.5 |
| Example 4 | PET Ultrafine fiber nonwoven fabric | 50 | | | 30 | 20 | 0 | Presence | 19.5 | 22.0 | 66.5 | 0.1 | 0.5 |
| Comparative Example 1 | PO Microporous film | - | | | - | - | - | Absence | 13.2 | 24.4 | 39.9 | 0.1 | 0.1 |
| Comparative Example 2 | PO Microporous film | - | | | - | - | - | Absence | 10.1 | 19.8 | 45.7 | 0.1 | 0.1 |
| Comparative Example 3 | PET Nonwoven fabric | 0 | | | 0 | 50 | 50 | Absence | 9.7 | 13.2 | 45.8 | 7.2 | 37.2 |
| Comparative Example 4 | PET Ultrafine fiber nonwoven fabric | 60 | | | 40 | 0 | 0 | Absence | 12.1 | 20.0 | 55.5 | 1.2 | 1.4 |
| Comparative Example 5 | PET Ultrafine fiber nonwoven fabric | 60 | | | 30 | 10 | 0 | Absence | 10.9 | 24.0 | 66.6 | 1.3 | 1.8 |
| Comparative Example 6 | PET Ultrafine fiber nonwoven fabric | 60 | | | 0 | 40 | 0 | Absence | 12.3 | 25.1 | 63.8 | 2.2 | 5.2 |

**[Table 2]**

| | Configuration | Gurley air permeability | MD Tensile strength | MD Tensile elongation | CD Tensile strength | CD Tensile elongation | Thrust strength | Thermal shrinkage rate | | Consecutive papermaking properties | Note |
|---|---|---|---|---|---|---|---|---|---|---|---|
| | | | | | | | | PO: 130°C × 1 h | | | |
| | | | | | | | | PET: 180°C × 1 h | | | |
| | | sec/100 cc | N/15 mm | % | N/15 mm | % | N | % (MD) | % (CD) | | |
| Example 1 | PET Ultrafine fiber nonwoven fabric | 1.0 | 8.5 | 11.3 | 6.5 | 13.8 | 1.5 | 2.9 | 2.3 | ○ | |
| Example 2 | PET Ultrafine fiber nonwoven fabric | 12.9 | 16.9 | 13.5 | 9.6 | 15.1 | 2.2 | 3.0 | 1.5 | ○ | |
| Example 3 | PET Ultrafine fiber nonwoven fabric | 32.0 | 13.5 | 10.5 | 6.7 | 10.3 | 1.8 | 3.0 | 2.1 | ○ | |
| Example 4 | PET Ultrafine fiber nonwoven fabric | 82.0 | 10.7 | 12.3 | 6.1 | 16.6 | 1.3 | 0.8 | 0.0 | ○ | Single coating |
| Comparative Example 1 | PO Microporous film | 457.4 | 46.0 | 59.3 | greater than 3 | greater than 100 | 3.4 | 25.1 | -2.0 | - | |
| Comparative Example 2 | PO Microporous film | 271.6 | 48.6 | 49.0 | greater than 2 | greater than 100 | 1.7 | 62.7 | 1.0 | - | |
| Comparative Example 3 | PET Nonwoven fabric | 0.1 | 8.3 | 11.1 | 3.1 | 12.0 | 1.3 | 2.5 | 0.5 | ○ | |
| Comparative Example 4 | PET Ultrafine fiber nonwoven fabric | 0.7 | 6.3 | 2.8 | 4.0 | 3.5 | 0.8 | 3.5 | 2.5 | × | |
| Comparative Example 5 | PET Ultrafine fiber nonwoven fabric | 0.6 | 4.7 | 3.3 | 3.6 | 4.1 | 1.3 | 3.8 | 2.9 | × | |
| Comparative Example 6 | PET Ultrafine fiber nonwoven fabric | 0.3 | 4.5 | 3.7 | 4.2 | 3.7 | 1.0 | 3.0 | 2.2 | ○ | |

### Industrial Applicability

According to the invention, a battery-separator nonwoven fabric and a battery separator that are excellent in heat resistance, have a small pore diameter, and have a high tensile elongation and a high thrust strength are provided, and the industrial value thereof is extremely high.

## Claims

1. A battery-separator nonwoven fabric **characterized by** comprising: a fiber A including a nanofiber having a fiber diameter of 100 to 1000 nm, wherein the fiber diameter is measured according to the method described in the description; a fiber B including a thermal adhesive ultrafine fiber having a fiber diameter of 100 to 2000 nm wherein the fiber diameter is measured according to the method described in the description; and a fiber C including a thermal adhesive fiber having a single fiber fineness of 0.1 dtex or more, wherein a tensile elongation of the nonwoven fabric is 100 or more wherein the tensile elongation is measured according to the method described in the description; and
wherein fiber B is an unstretched polyester fiber.

2. The battery-separator nonwoven fabric according to claim 1, wherein fiber C is an unstretched polyester fiber.

3. The battery-separator nonwoven fabric according to claims 1 or 2, comprising: 30 weighty or more of the fiber A, 20 weight% or more of the fiber B, and 20 weight% or more of the fiber C.

4. The battery-separator nonwoven fabric according to any one of claims 1 to 3, wherein a thickness of the nonwoven fabric is 30 µm or less, and a porosity of the nonwoven fabric is 40 to 70%; wherein the porosity is measured according to the method described in the description.

5. The battery-separator nonwoven fabric according to any one of claims 1 to 4, wherein the fiber A, the fiber B, or the fiber C includes a polyester fiber or a polyphenylene sulfide fiber.

6. A battery separator formed by using the battery-separator nonwoven fabric according to any one of claims 1 to 5.

7. The battery separator according to claim 6, wherein an organic porous layer or an inorganic fine particle layer having a melting point higher than that of the nonwoven fabric is laminated on one surface or both surfaces of the nonwoven fabric.

8. The battery separator according to claim 7, wherein a thickness of the organic porous layer or the inorganic fine particle layer is in a range of 1 to 10 µm.

## Patentansprüche

1. Batterietrennvliesstoff, **dadurch gekennzeichnet, dass** er Folgendes umfasst: eine Faser A, die eine Nanofaser mit einem Faserdurchmesser von 100 bis 1000 nm umfasst, wobei der Faserdurchmesser gemäß dem in der Beschreibung beschriebenen Verfahren gemessen wird; eine Faser B, die eine wärmehaftende ultrafeine Faser mit einem Faserdurchmesser von 100 bis 2000 nm umfasst, wobei der Faserdurchmesser gemäß dem in der Beschreibung beschriebenen Verfahren gemessen wird; und eine Faser C, die eine wärmehaftende Faser mit einer Einzelfaserfeinheit von 0,1 dtex oder mehr umfasst, wobei eine Zugdehnung des Vliesstoffs 10 % oder mehr beträgt, wobei die Zugdehnung gemäß dem in der Beschreibung beschriebenen Verfahren gemessen wird; und
wobei die Faser B eine ungedehnte Polyesterfaser ist.

2. Batterietrennvliesstoff nach Anspruch 1, wobei die Faser C eine ungedehnte Polyesterfaser ist.

3. Batterietrennvliesstoff nach den Ansprüchen 1 oder 2, umfassend: 30 Gew.-% oder mehr der Faser A, 20 Gew.-% oder mehr der Faser B und 20 Gew.-% oder mehr der Faser C.

4. Batterietrennvliesstoff nach einem der Ansprüche 1 bis 3, wobei eine Dicke des Vliesstoffs 30 µm oder weniger beträgt und eine Porosität des Vliesstoffs 40 bis 70 % beträgt; wobei die Porosität gemäß dem in der Beschreibung beschriebenen Verfahren gemessen wird.

5. Batterietrennvliesstoff nach einem der Ansprüche 1 bis 4, wobei die Faser A, die Faser B oder die Faser C eine Polyesterfaser oder eine Polyphenylensulfidfaser umfasst.

6. Batterieseparator, der unter Verwendung des Batterietrennvliesstoffs nach einem der Ansprüche 1 bis 5 ausgebildet ist.

7. Batterieseparator nach Anspruch 6, wobei eine organische poröse Schicht oder eine anorganische Feinpartikelschicht mit einem Schmelzpunkt, der höher als derjenige des Vliesstoffs ist, auf eine Oberfläche oder beide Oberflächen des Vliesstoffs auflaminiert ist.

8. Batterieseparator nach Anspruch 7, wobei eine Dicke der organischen porösen Schicht oder der anorganischen Feinpartikelschicht in einem Bereich von 1 bis 10 µm liegt.

## Revendications

1. Non-tissé pour séparateur de batterie **caractérisé en ce qu'**il comprend : une fibre A comportant une nanofibre ayant un diamètre de fibre de 100 à 1000 nm, le diamètre de fibre étant mesuré conformément à la méthode décrite dans la description ; une fibre B comportant une fibre ultrafine d'adhésif thermique ayant un diamètre de fibre de 100 à 2000 nm, le diamètre de fibre étant mesuré conformément à la méthode décrite dans la description ; et une fibre C comportant une fibre d'adhésif thermique ayant une seule finesse de fibre de 0,1 dtex ou plus, un allongement en traction du non-tissé étant de 10 % ou plus, l'allongement en traction étant mesuré conformément à la méthode décrite dans la description ; et
la fibre B étant une fibre de polyester non étirée.

2. Non-tissé pour séparateur de batterie selon la revendication 1, dans lequel la fibre C est une fibre de polyester non étirée.

3. Non-tissé pour séparateur de batterie selon les revendications 1 ou 2, comprenant : 30 % en poids de la fibre A ou plus, 20 % en poids de la fibre B ou plus, et 20 % en poids de la fibre C ou plus.

4. Non-tissé pour séparateur de batterie selon l'une quelconque des revendications 1 à 3, une épaisseur du non-tissé étant de 30 µm ou moins, et une porosité du non-tissé étant de 40 à 70 %, la porosité étant mesurée conformément à la méthode décrite dans la description.

5. Non-tissé pour séparateur de batterie selon l'une quelconque des revendications 1 à 4, dans lequel la fibre A, la fibre B ou la fibre C comporte une fibre de polyester ou une fibre de polysulfure de phénylène.

6. Séparateur de batterie formé au moyen du non-tissé pour séparateur de batterie selon l'une quelconque des revendications 1 à 5.

7. Séparateur de batterie selon la revendication 6, dans lequel une couche poreuse organique ou une couche de fines particules inorganiques ayant un point de fusion plus élevé que celui du non-tissé est stratifiée sur une surface ou les deux surfaces du non-tissé.

8. Séparateur de batterie selon la revendication 7, dans lequel une épaisseur de la couche poreuse organique ou de la couche de fines particules inorganiques se situe dans une plage de 1 à 10 µm.
